# EUROPÄISCHE PATENTSCHRIFT

(11) **EP 1 260 307 B1**
(45) Veröffentlichungstag und Bekanntmachung des Hinweises auf die Patenterteilung: **24.10.2007**
(21) Anmeldenummer: 02010777.7
(22) Anmeldetag: 15.05.2002
(51) Int. Cl.: B23Q 7/04, B23Q 1/76, B23Q 1/62

(54) **Werkzeugmaschine und Verfahren zur Bearbeitung eines stangenförmigen Werkstücks**
Machine tool and method of working an elongated workpiece
Machine-outil et procédé d'usinage d'une pièce en forme de barre

(30) Priorität: 17.05.2001 DE 10125729; 10.09.2001 DE 10145674
(43) Veröffentlichungstag der Anmeldung: 27.11.2002
(73) Patentinhaber: Chiron-Werke GmbH & Co. KG, 78532 Tuttlingen (DE)
(72) Erfinder: Prust, Dirk, 78532 Tuttlingen (DE); Haninger, Rudolf, 78606 Seitingen-Oberflacht (DE)
(74) Vertreter: Duhme, Torsten

(56) Entgegenhaltungen:
- EP-A- 0 689 890
- EP-A- 0 827 807
- US-A- 5 303 622
- PATENT ABSTRACTS OF JAPAN Bd. 013, Nr. 542 (M-901), 5. Dezember 1989 (1989-12-05) -& JP 01 222809 A (SHIN NIPPON KOKI KK), 6. September 1989 (1989-09-06)

## Beschreibung

Die Erfindung betrifft eine Werkzeugmaschine zur Bearbeitung eines stangenförmigen Werkstücks, mit einer Werkzeugspindel sowie mit einem ersten und einem zweiten Halter zur Aufnahme des Werkstücks, wobei der zweite Halter in einer Bearbeitungsstellung koaxial zu dem ersten Halter ausgerichtet und um eine zu einer Längsachse des Werkstücks senkrechte Achse drehbar angeordnet ist.

Die Erfindung betrifft ferner ein Verfahren zur Bearbeitung eines stangenförmigen Werkstücks unter Verwendung einer Werkzeugmaschine, die eine Werkzeugspindel sowie einen ersten und einen zweiten Halter zur Aufnahme des Werkstücks aufweist.

Eine Werkzeugmaschine sowie ein Verfahren dieser Art sind aus der DE 199 19 647 A1 bekannt.

Die bekannte Werkzeugmaschine ist eine Fahrständermaschine, auf deren Maschinenbett eine Werkstückspannvorrichtung für ein Werkstück angeordnet ist. Die Werkstückspannvorrichtung ist um eine horizontale Achse schwenkbar, so daß ein darin eingespanntes Werkstück sowohl längsseitig als auch an einer der Einspannstelle gegenüberliegenden Stirnseite von einem Werkzeug bearbeitet werden kann, das in einer an dem Fahrständer befestigten Werkzeugspindel aufgenommen ist. Um auch die sechste Werkstückseite bearbeiten zu können, ist eine Art Roboterarm (Manipulator) vorgesehen, der um eine vertikale Achse schwenkbar ist und einen Greifer aufweist. Nach Abschluß der Bearbeitung der fünf zunächst zugänglichen Seiten des Werkstücks nimmt der Greifer das Werkstück aus der Werkstückspannvorrichtung heraus. Der Roboterarm wird sodann um 90° in der Horizontalen sowie um 180° um seine Längsachse verschwenkt und der Greifer in eine Spannstation eingelegt. Die Spannstation hält und fixiert den Greifer und damit das darin noch aufgenommene Werkstück lagegenau, so daß dieses nunmehr auch an seiner sechsten Seite von dem Werkzeug bearbeitet werden.

Auch herkömmliche Drehmaschinen weisen in der Regel eine Werkstückspannvorrichtung mit einem selbstzentrierenden Spannfutter auf, in das das zu bearbeitende Werkstück drehfest eingespannt wird. Als Gegenstück dient häufig ein Reitstock, der auf einem Maschinenbett verschieb- und festklemmbar ist. Das Werkstück wird dabei häufig mit Hilfe eines Dorns zentriert, der in einem speziell hierfür ausgelegten, als Pinole bezeichneten Spannfutter des Reitstocks aufgenommen ist. Alternativ oder zusätzlich hierzu ist bei solchen Drehmaschinen oft ein Setzstock (Lünette) längsverschieblich auf dem Maschinenbett befestigt, der das Werkstück zwischenlagerartig abstützt, um auf diese Weise ein Durchbiegen des Werkstücks unter der Einwirkung des Schnittdrucks zu verhindern.

Um bei derartigen Drehmaschinen das Werkstück auch an der Einspannstelle bearbeiten zu können, an der es in dem Spannfutter der Werkstückspannvorrichtung aufgenommen ist, wird das Werkstück aus der Werkstückspannvorrichtung ausgespannt und um 180° gewendet wieder in diese eingespannt. Dieser Vorgang ist relativ zeitaufwendig und läßt sich bislang nur schwer und mit größerem konstruktiven Aufwand automatisieren.

Eine Werkzeugmaschine gemäß dem Oberbegriff des Anspruchs 1 ist aus der EP 0 827 807 A1 bekannt.

Aufgabe der vorliegenden Erfindung ist es, eine Werkzeugmaschine der eingangs genannten Art konstruktiv insgesamt zu vereinfachen. Dabei soll ebenfalls eine Bearbeitung der Einspannstelle, an der das Werkstück in dem ersten Halter aufgenommen ist, mit einem in der Werkzeugspindel aufgenommenen Werkzeug möglich sein.

Aufgabe der Erfindung ist es ferner, auch ein Verfahren der eingangs genannten Art in diesem Sinne zu verbessern.

Bei einer Werkzeugmaschine der eingangs genannten Art wird diese Aufgabe erfindungsgemäß dadurch gelöst, daß der zweite Halter um die senkrechte Achse verschwenkbar ist, daß der zweite Halter zur Erzielung einer Schwenkbewegung exzentrisch zu der senkrechten Achse angeordnet ist, daß der zweite Halter auf einem um die senkrechte Achse drehbaren Träger angeordnet ist und daß die senkrechte Achse die Längsachse nicht schneidet.

Bei einem Verfahren der eingangs genannten Art wird diese Aufgabe erfindungsgemäß durch folgende Schritte gelöst:
a) Einführen des Werkstücks in den ersten Halter und den zweiten Halter, wobei der zweite Halter koaxial zu dem ersten Halter ausgerichtet ist;
b) Bearbeiten des Werkstücks mit einem Werkzeug, das in eine an der Werkzeugspindel angeordneten Werkzeugaufnahme aufgenommen ist;
c) Durchtrennen des Werkstücks an einer Stelle zwischen dem ersten Halter (14) und dem zweiten Halter (54, 56, 58) oder Herausschieben des Werkstücks (20) aus dem ersten Halter (14);
d) Drehen oder Schwenken des zweiten Halters um eine zu einer Längsachse des Werkstücks senkrechte Achse;
e) Bearbeiten des in dem zweiten Halter gehaltenen Werkstücks.

Die der Erfindung zugrundeliegende Aufgabe wird auf diese Weise jeweils vollkommen gelöst.

Aufgrund der Dreh- oder Verschwenkbarkeit des zweiten Halters kann das darin aufgenommene Werkstück soweit von dem ersten Halter wegbewegt werden, daß auch die Einspannstelle einer Bearbeitung durch ein in die Werkzeugspindel eingesetztes Werkzeug zugänglich wird. Um das Werkstück drehen oder verschwenken zu können, kann dieses bspw. vorher an einer Stelle zwischen dem ersten Halter und dem zweiten Halter durchtrennt worden sein, z.B. durch Fräsen oder Sägen. Das Werkstück kann aber auch unzertrennt, d.h. als Ganzes, mit dem zweiten Halter gedreht oder verschwenkt werden, wenn es zuvor vollständig aus dem ersten Halter herausgeschoben wird. Dies kann bspw. durch eine an sich bekannte Vorschubeinrichtung oder auch mit Hilfe eines zweiten Werkstücks erfolgen, welches in den ersten Halter eingeführt wird und dabei das zweite Werkstück aus diesem herausschiebt.

Vorzugsweise wird bei einer Fahrständermaschine die durch das Drehen oder Verschwenken frei gewordene Einspannstelle des Werkstücks von der Werkzeugspindel angefahren und mit dem darin aufgenommenen Werkzeug bearbeitet. Grundsätzlich ist es aber ebenso möglich, den zweiten Halter derart zu verfahren, daß die Einspannstelle des Werkstücks der sich drehenden, aber räumlich ansonsten feststehenden Werkzeugspindel zugestellt wird.

Vorzugsweise ist der zweite Halter um wenigstens 180° dreh- oder verschwenkbar.

Auf diese Weise kann das von dem zweiten Halter gehaltene Werkstück vollständig gewendet werden, wodurch die Stelle, an der es zuvor in dem ersten Halter gehalten war, besonders gut zugänglich wird. Falls dies erforderlich sein sollte, kann das Werkstück auch mehrfach gewendet werden, so daß die axialen Enden des Werkstückes wechselseitig bearbeitet werden können.

Falls der zweite Halter drehbar angeordnet ist, bleibt die koaxiale Ausrichtung zu dem ersten Halter nach der Drehung erhalten. Bei einer Verschwenkbewegung des zweiten Halters um 180° wird hingegen nur noch eine parallele, nicht aber eine koaxiale Ausrichtung zu dem ersten Halter erreicht. Eine Schwenkbewegung ist in vielen Fällen gegenüber einer Drehbewegung vorzuziehen, da auf diese Weise ein von dem zweiten Halter gehaltenes Werkstück nach dem Verschwenken nicht mit einem sich noch in dem ersten Halter befindenden Werkstück, z.B. einem vorher abgetrennten Teil, kollidieren kann.

Es ist deswegen erfindungsgemäß vorgesehen, daß der zweite Halter zur Erzielung einer Schwenkbewegung exzentrisch zu der senkrechten Achse angeordnet ist. Die senkrechte Achse schneidet somit die Längsachse des Werkstücks nicht.

Bei einer bevorzugten Weiterbildung ist auf dem Träger außerdem wenigstens ein weiterer Halter exzentrisch zu der senkrechten Achse angeordnet, so daß der weitere Halter durch Drehen des Trägers um die senkrechte Achse in eine zu dem ersten Halter koaxiale Lage überführbar ist.

Auf diese Weise können mehrere, ggf. unterschiedliche Halter durch eine einfache Drehbewegung des Trägers zur Aufnahme von Werkstücken zur Verfügung gestellt werden. Durch Drehen des Trägers um die senkrechte Achse wird der ausgewählte Halter koaxial fluchtend zu dem ersten Halter ausgerichtet. Das Werkstück kann dann z.B. durch Verschub in seiner Längsrichtung in diesen ausgewählten Halter eingeführt und anschließend weiter bearbeitet werden. Es können auch gleichartige Halter auf dem Träger angeordnet sein. Dies ist z.B. dann zweckmäßig, wenn während der Bearbeitung eines gewendeten Werkstückes ein anderes Werkstück bereits wieder in einen weiteren Halter eingeführt werden soll.

Besonders bevorzugt ist es aber, wenn die weiteren Halter unterschiedlich, insbesondere als Lünette, als Pinole oder als Kraftspannbock, ausgebildet sind.

Auf diese Weise wird eine Art Multifunktionsplattform geschaffen, wobei ein Funktionswechsel durch einfaches Drehen des Trägers erfolgt. Ein Halter kann z.B. als Pinole mit einem darin aufgenommenen Dorn ausgebildet sein, wodurch insbesondere bei kleineren Schneidkräften oder bei kurzen Werkstücken eine Zentrierung mit ausreichender Abstützung des Werkstücks ermöglicht wird. Ein anderen Halter kann als Lünette ausgebildet sein, mit der sich größere Schneidkräfte auch bei der Langdrehbearbeitung abstützen lassen. Die Lünette kann das Werkstück dabei bspw. an drei Umfangspunkten mit festen Backen oder mit Rollen unterstützen. Mit einem als Kraftspannbock ausgebildeten Halter, in dem das Werkstück fest fixiert ist, kann das Werkstück ergriffen und durch Drehen des Trägers gewendet werden. Gerade bei Fräs- oder Bohrbearbeitungen, die eine starre Fixierung des Werkstücks erfordern, ist die Verwendung eines Kraftspannbocks als Halter zweckmäßig. Vorzugsweise sind die Halter lösbar an dem Träger befestigt, so daß sie gegen Halter mit anderen Funktionen austauschbar sind. Aufgrund dieses modularen Aufbaus kann die Multifunktionsplattform an unterschiedlichste Anforderungen angepaßt werden.

Besonders bevorzugt ist es außerdem, wenn der erste Halter gegenüber der Werkzeugmaschine raumfest und der zweite Halter parallel zu der Längsachse des Werkstücks verfahrbar angeordnet ist.

Dies hat den Vorteil, daß der zweite Halter, der zu diesem Zweck vorzugsweise als Lünette ausgebildet ist, stets in unmittelbare Nähe zu der momentanen Bearbeitungsstelle verfahren werden kann. Auf diese Weise läßt sich das Werkstück stets optimal kurz abstützen, so daß auftretende Biegemomente nicht zu einer Verformung des Werkstücks führen. Die Verfahrbarkeit eröffnet ferner die Möglichkeit, den zweiten Halter, ggf. zusammen mit einem Träger, auf dem er mit weiteren Haltern befestigt ist, so weit aus dem möglichen Bearbeitungsbereich herauszufahren, daß er die Bearbeitung eines in dem ersten Halter aufgenommenen Werkstücks nicht behindert.

Falls der zweite Halter eine feste Fixierung des Werkstücks in Längsrichtung ermöglicht, wie dies z.B. bei einem Kraftspannbock der Fall ist, so kann dieser auch als Vorschubeinheit für das Werkstück verwendet werden. Somit lassen sich z.B. Abschnitte des Werkstücks sukzessive bearbeiten, indem nach Bearbeitung eines Abschnitts das Werkstück um eine entsprechende Abschnittslänge vorgeschoben und die Bearbeitung an dem nächsten Abschnitt fortgesetzt wird, wobei das Werkstück stets auch von dem ersten Halter gehalten bleibt. Auf diese Weise lassen sich auch solche Werkstücke bearbeiten, die länger als der von dem Fahrständer erreichbare Bearbeitungsbereich sind. Die Länge des Werkstücks kann sogar größer als die Breite der Werkzeugmaschine sein, sofern ein ggf. vorhandenes Maschinengehäuse geeignete Öffnungen zum Durchtritt der Werkstücke aufweist.

Der erste Halter kann ebenfalls als Kraftspannbock ausgeführt sein. Dies ist etwa dann zweckmäßig, wenn lediglich eine Bearbeitung des Werkstücks an seiner zu der Werkzeugspindel weisenden Längsseite vorgesehen ist, so daß keine Drehung des Werkstücks um seine Längsachse erforderlich ist.

Vorzugsweise jedoch ist der erste Halter als Drehspindel ausgebildet.

Auf diese Weise ist eine Drehbearbeitung des Werkstücks möglich. Anstelle der Drehspindel kann auch ein Rundtisch als erster Halter verwendet werden, der eine winkelgenaue Zustellung und damit eine Vier-Seiten-Bearbeitung des darin gehaltenen Werkstücks erlaubt. Als erster Halter kommt auch eine NC-Drehspindel in Betracht, die die Eigenschaften einer Drehspindel mit denen eines Rundtisches, d.h. hohe Umdrehungszahlen und winkelgenaue Positionierung, vereint.

Bei einer bevorzugten Ausgestaltung der Erfindung weist die Werkzeugmaschine einen Fahrständer auf, an dem die um eine Spindelachse drehbare Werkzeugspindel um eine Schwenkachse verschwenkbar befestigt ist, wobei die Schwenkachse senkrecht sowohl zu der Spindelachse als auch zu einer Längsachse des Werkstücks angeordnet ist.

Aufgrund dieser verschwenkbaren Anordnung der Werkzeugspindel kann das Werkstück nicht nur senkrecht zu seiner Umfangsfläche, sondern auch geneigt hierzu bearbeitet werden. Auch die Stirnflächen des Werkstücks können auf diese Weise erreicht werden, ohne daß das Werkstück geschwenkt werden muß. Dies ist insbesondere bei langen Werkstücken von Vorteil, da hierfür ansonsten konstruktiv aufwendig Schwenkraum geschaffen werden muß.

Bei einer vorteilhaften Weiterbildung dieser Ausgestaltung ist die Schwenkachse überschneidungsfrei zu der Spindelachse angeordnet.

Dies ermöglicht eine konstruktiv einfachere und stabilere Befestigung der Spindel am Fahrständer, da eine zum Verschwenken der Werkzeugspindel vorgesehene Schwenkeinrichtung nicht von der Drehspindel unterbrochen ist. Dies Maßnahme ist im übrigen auch bei solchen Werkzeugmaschinen vorteilhaft, bei denen die Schwenkachse nicht senkrecht zu der Längsachse des Werkstücks, sondern in anderer Weise, insbesondere parallel hierzu, ausgerichtet ist.

Bei einer weiteren bevorzugten Ausgestaltung ist die Werkzeugspindel um einen Schwenkwinkel von mindestens 90° verschwenkbar.

Dies hat den Vorteil, daß eine Bearbeitung auch senkrecht zur Stirnfläche des Werkstücks her erfolgen kann. Falls der erste Halter als Rundtisch oder NC-Drehspindel ausgebildet ist, wird dadurch eine Sechs-Seiten-Bearbeitung des Werkstücks möglich, da durch Drehen oder Verschwenken des zweiten Halters auch die Einspannstelle des Werkstücks einer Bearbeitung zugänglich wird. Besonders wichtig ist dieser Aspekt z.B. bei der Bearbeitung von Aluminiumprofilen, da diese häufig überwiegend stirnseitig an beiden Enden zu bearbeiten sind.

Da die senkrechte Achse, um die der zweite Halter dreh- oder schwenkbar ist, senkrecht zu der Schwenkachse der Werkzeugspindel angeordnet ist, ist außerdem eine Bearbeitung des Werkstücks in jeder räumlichen Winkellage zwischen Werkzeug und Werkstück möglich. Dies gilt auch für die sechste Seite (Einspannstelle) des Werkstücks. Diese besondere Eigenschaft wird ohne Redundanz, d.h. mit minimalen konstruktiven Aufwand, erzielt.

Bei Schwenkwinkeln von mehr als 90° kann sogar die Unterseite des Werkstücks von dem Werkzeug erreicht werden, was besonders wichtig ist, falls das Werkstück nicht um seine Längsachse gedreht werden kann. Insgesamt lassen sich auf diese Weise sehr komplexe Bearbeitungsvorgänge mit unterschiedlichsten Anforderungen automatisiert durchführen.

Bei einer anderen bevorzugten Ausgestaltung dieser Weiterbildung ist die Werkzeugspindel vorzugsweise zusammen mit einem Antrieb hierfür in einem Spindelgehäuse aufgenommen, wobei die Schwenkachse auf der Höhe der vorderen, eine Werkzeugaufnahme aufweisenden Hälfte, vorzugsweise auf der Höhe des vorderen Viertels, des Spindelgehäuses verläuft.

Aufgrund des geringen Abstands zwischen Werkzeugaufnahme und Schwenkachse bewegt sich das Werkzeug beim Verschwenken der Werkzeugspindel auf einer Kreisbahn mit kleinem Radius, was zu kurzen Ausgleichsbewegungen des Fahrständers führt, wenn lediglich die Winkellage des Werkzeugs, nicht aber dessen Raumposition als solche verändert werden soll. Zusammen mit der überschneidungsfreien Anordnung von Schwenkachse und Spindelachse lassen auf diese Weise außerdem kurze Verfahrwege des Fahrständers in der Richtung senkrecht zur Längsrichtung des Werkstücks und zur Schwenkachse realisieren. Bei Fahrständermaschinen in der üblichen Ausführung, bei denen sowohl die Werkstücke als auch die Schwenkachse horizontal angeordnet sind, werden durch diese Maßnahme die Verfahrwege in der Vertikalen verkürzt. Folglich benötigt eine derartige Werkzeugmaschine einen geringeren Platzbedarf in der Höhe, die sog. Z-Achse kann also mit geringem Hub ausgelegt werden.

Je kleiner dabei der Abstand zwischen der Schwenkachse und dem Werkzeug ist, desto kleiner ist der Bewegungsradius des Werkzeugs bei der Schwenkbewegung. Allerdings kann die Schwenkachse auch nicht beliebig nahe an dem Werkzeug angeordnet werden, da der Raum um das Werkzeug herum möglichst frei bleiben sollte. Nur dann ist sichergestellt, daß das Werkzeug das Werkstück in allen Lagen ohne Behinderung durch eine für die Verschwenkbarkeit erforderliche Schwenkeinrichtung erreichen und bearbeiten kann. Vorzugsweise befindet sich deswegen eine derartige Schwenkeinrichtung in unmittelbarer Nähe zu einer Stirnfläche des Spindelgehäuses oder schließt sogar bündig mit dieser ab.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines Ausführungsbeispiels der Erfindung anhand der Zeichnung. Darin zeigen:
- Fig. 1: eine Seitenansicht wichtiger Baugruppen einer erfindungsgemäßen Werkzeugmaschine in vereinfachter schematischer Darstellung;
- Fig. 2: die Werkzeugmaschine aus Fig. 1 mit verschwenkter Werkzeugspindel;
- Fig. 3: eine Seitenansicht eines Spindelgehäuse der in Fig. 1 gezeigten Werkzeugmaschine, in der unterschiedliche Anordnungen einer Schwenkachse angedeutet sind;
- Fig. 4a und 4b: Bewegungsbahnen von Werkzeugen beim Verschwenken für die beiden in Fig. 3 gezeigten Anordnungen der Schwenkachse;
- Fig. 5a bis 5d: eine Draufsicht auf die in Fig. 1 gezeigte Werkzeugmaschine in vereinfachter schematischer Darstellung, in der eine Multifunktionsplattform mit mehreren Haltern in unterschiedlichen Drehpositionen erkennbar ist;
- Fig. 6: die in Fig. 1 gezeigte Werkzeugmaschine in einer perspektivischen Darstellung, bei der Fig. 5a entsprechend ein stangenförmiges Werkstück zwischen einer NC-Drehspindel und einer Pinole gehalten ist;
- Fig. 7: die in Fig. 6 gezeigte Werkzeugmaschine in einer Vorderansicht;
- Fig. 8: die in Fig. 1 gezeigte Werkzeugmaschine in einer perspektivischen Darstellung, bei der Fig. 5b entsprechend ein stangenförmiges Werkstück von einer NC-Drehspindel und einer Lünette gehalten ist;

- Fig. 9: die in Fig. 8 gezeigte Werkzeugmaschine in Draufsicht;
- Fig. 10: die in Fig. 1 gezeigte Werkzeugmaschine in einer perspektivischen Darstellung, bei der Fig. 5d entsprechend ein stangenförmiges Werkstück von einer NC-Drehspindel und einem um 180° gewendeten Kraftspannbock gehalten wird.

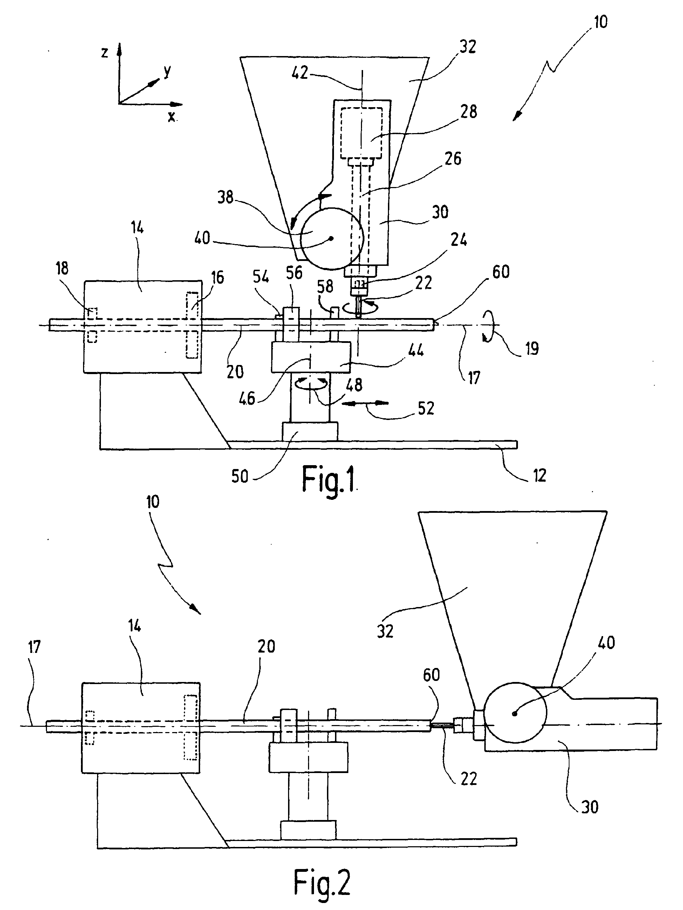

Fig. 1 zeigt in schematischer vereinfachter Darstellung wichtige Baugruppen einer erfindungsgemäßen Werkzeugmaschine, die insgesamt mit 10 bezeichnet und als Fahrständermaschine ausgebildet ist. Auf einem Maschinenbett 12 ist eine NC-Drehspindel 14 befestigt, in der lediglich schematisch Spannbacken 16 sowie ein mit einer nicht dargestellten Steuerung der Werkzeugmaschine verbundener Drehgeber 18 angedeutet sind. Mit Hilfe der NC-Drehspindel 14 läßt sich ein in die Spannbacken 16 eingespanntes stangenförmiges Werkstück 20 in eine Drehung um eine mit 17 angedeutete Längsachse versetzen, wie dies in Fig. 1 durch einen Pfeil 19 angedeutet ist. Die Drehfrequenz ist dabei so hoch - vorzugsweise mehrere Tausend Umdrehungen pro Minute -, daß das Werkstück 20 auf der Fahrständermaschine nicht nur einer Fräs- und Bohrbearbeitung unterzogen, sondern auch drehbearbeitet werden kann. Der Drehgeber 18 erfaßt die Winkellage des Werkstücks 20, wodurch eine präzise Winkelorientierung des Werkstücks 20, wie sie etwa von herkömmlichen NC-Rundtischen her bekannt ist, ermöglicht wird. Das Werkstück 20 läßt sich auf diese Weise winkelgenau zustellen, um an seiner Umfangsfläche die für eine Fahrständermaschine üblichen Fräsarbeiten u.ä. durchführen zu können.

Die Bearbeitung des Werkstücks 20 erfolgt mit einem Werkzeug 22, das in einer Werkstückaufnahme 24 einer Werkzeugspindel 26 aufgenommen ist. Die Werkzeugspindel 26 ist zusammen mit einem in Fig. 1 nur schematisch angedeuteten Antrieb 28 in einem Spindelgehäuse 30 aufgenommen.

Die Werkzeugspindel 26 ist mit dem Spindelgehäuse 30 verschwenkbar an einem Fahrständer 32 befestigt, der in alle drei Raumrichtungen, d.h. in der Höhe Z sowie in beiden horizontalen Raumrichtungen X und Y verfahrbar ist. Die Verschwenkbarkeit des Spindelgehäuses 30 gegenüber dem Fahrständer 32 wird durch eine Schwenkeinrichtung 38 ermöglicht, die bspw. eine sich über die gesamte Ausdehnung des Spindelgehäuses 30 in Y-Richtung erstreckende Schwenkwelle aufweisen kann. Die Schwenkeinrichtung 38 legt eine Schwenkachse 40 fest, die in Y-Richtung, d.h. senkrecht sowohl zur Längsachse 17 des Werkstücks 20 als auch zu einer Spindelachse 42 verläuft, um die herum die Werkzeugspindel 26 durch den Antrieb 28 in Drehung versetzt wird.

Die Werkzeugmaschine 10 weist ferner einen Träger 44 auf, der um eine zu der vertikalen Längsachse 17 des Werkstücks 20 senkrechte Achse 46 motorisch gedreht werden kann, wie dies in Fig. 1 durch eine Pfeil 48 angedeutet ist. Der Träger 44 ist hierzu über ein Gelenk mit einem Reiter 50 verbunden, der auf in Fig. 1 nicht erkennbaren Schienen geführt ist, so daß er in X-Richtung motorisch verfahren werden kann, wie dies durch einen Pfeil 52 angedeutet ist.

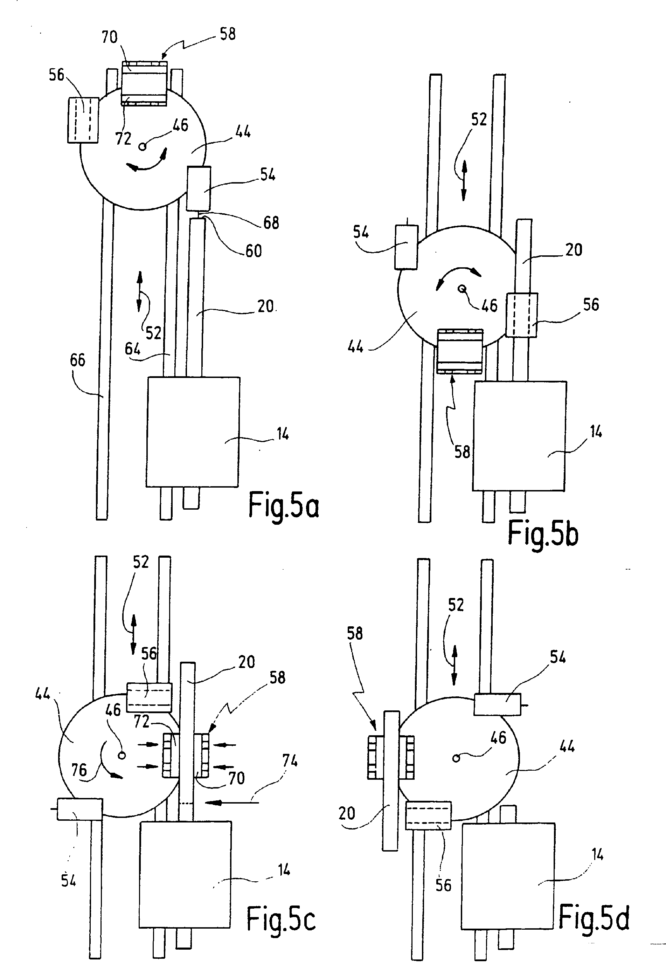

Auf dem Träger 44 sind drei Halter 54, 56 und 58 angeordnet, die in der Art eines Gegenlagers das Werkstück 20 halten oder abstützen. Nähere Einzelheiten zu den Haltern 54, 56 und 58 werden weiter unten anhand der Fig. 5a bis 5d erläutert.

Bei einer auf der Fahrständermaschine 10 ebenfalls möglichen Drehbearbeitung des Werkstücks 20 wird dieses von der NC-Drehspindel 14 in Drehung versetzt, während ein geeignetes Werkzeug 22, z.B. ein Drehmeißel, das Werkstück 20 profiliert. Die Werkzeugspindel 26, in die dieses Werkzeug eingespannt ist, ist zu diesem Zweck arretiert, so daß sie sich nicht drehen kann. Der Fahrständer 32 bewegt sich dabei mit der daran befestigten Werkzeugspindel 26 sowohl in Z- als auch in X-Richtung. Bei anderen spanabhebenden Bearbeitungen, z.B. Bohren oder Fräsen auf der Umfangsfläche des Werkstücks 20, wird dieses mit Hilfe der NC-Drehspindel 14 zunächst in die gewünschte Winkellage überführt und anschließend mit einem geeigneten Werkzeug 22 bearbeitet, das durch die Werkzeugspindel 26 in Drehung versetzt wird.

Falls das Werkstück 20 an seiner Stirnfläche 60 bearbeitet werden soll, wird das Spindelgehäuse 30 um die Schwenkachse 40 so weit geschwenkt, bis die Werkzeugspindel 26 die gewünschte Winkellage zu der Längsachse 17 des Werkstücks 20 eingenommen hat.

Fig. 2 zeigt die Werkzeugmaschine 10 mit einem derart verschwenkten Spindelgehäuse 30. Um die Stirnfläche 60 des Werkstücks 20 aus der in Fig. 1 gezeigten Position erreichen zu können, ist der Fahrständer 32 außerdem in X- und auch in Z-Richtung verfahren worden. Bei der in Fig. 2 gezeigten Bearbeitungsposition ist das Spindelgehäuse 30 gegenüber seiner in Fig. 1 dargestellten Vertikallage um 90° verschwenkt worden, so daß das Werkzeug 22 senkrecht an der Stirnfläche 60 des Werkstücks 20 angreifen kann. Bei größeren Schwenkwinkeln als 90° kann das Werkzeug 22 auch unter das Werkstück 20 gelangen, was etwa dann zweckmäßig ist, wenn das Werkstück 20 nicht um seine Längsachse 17 gedreht werden kann oder anstelle einer NC-Drehspindel 14 ein einfacher Spannbock als Halter verwendet wird.

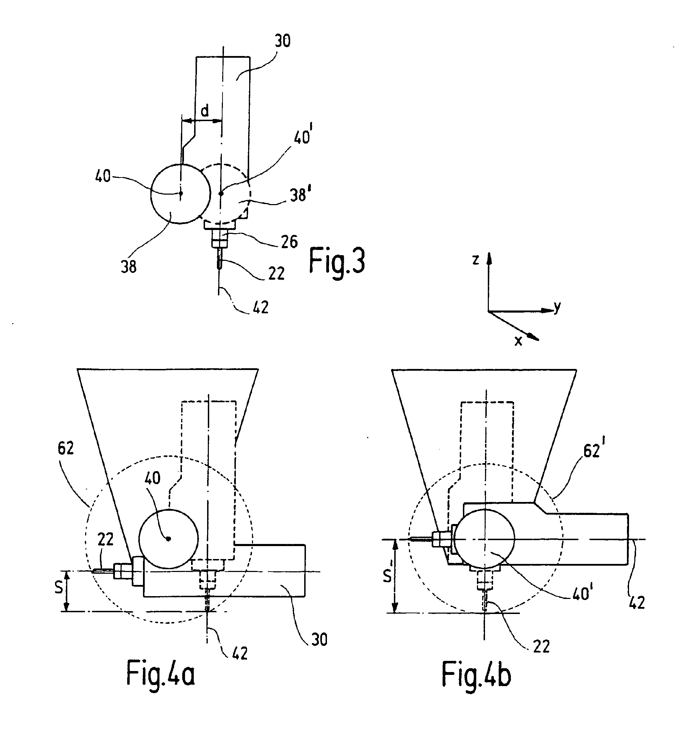

Bei der in Fig. 1 gezeigten Werkzeugmaschine 10 ist die Schwenkachse 40 versetzt zu der Spindelachse 42 angeordnet und schneidet diese somit nicht. In Fig. 3, die das Spindelgehäuse 30 mit der Schwenkeinrichtung 38 zeigt, ist dieser Versatz mit d bezeichnet; ferner ist dort gestrichelt eine alternative Anordnung einer Schwenkeinrichtung 38' angedeutet, bei der die Schwenkachse 40' die Spindelachse 42 schneidet. In Abhängigkeit davon, ob die Schwenkachse 40 die Spindelachse 42 schneidet oder nicht, ergeben sich unterschiedliche Bewegungsbahnen für das Spindelgehäuse 30 und insbesondere für das in der Werkzeugspindel 26 aufgenommene Werkzeug 22.

Diese Bewegungsbahnen sind in den Fig. 4a und 4b dargestellt. Bei der in Fig. 4a gezeigten Werkzeugmaschine ist die Schwenkachse 40 gegenüber der Spindelachse 42 um den Abstand d versetzt, wie dies auch in Fig. 1 der Fall ist. Die Spitze des Werkzeugs 22 beschreibt beim Übergang zwischen einer vertikalen zu einer horizontalen Lage (vgl. Fig. 1 und 2) einen Abschnitt einer Kreisbahn 62. Bei dieser Schwenkbewegung legt die Spitze des Werkzeugs 22 in der Vertikalen Z insgesamt eine Strecke s zurück.

Fig. 4b zeigt eine Werkzeugmaschine, bei der die Schwenkachse 40' die Spindelachse 42 schneidet. Die Spitze des Werkzeugs 22 beschreibt dabei ebenfalls einen Abschnitt einer Kreisbahn 62', deren Radius jedoch etwas kleiner ist als derjenige der Kreisbahn 62. Aus einem Vergleich der Fig. 4a und 4b geht hervor, daß die Strecke s', die die Spitze des Werkzeugs 22 in der Vertikalen Z in diesem Fall zurücklegt, größer ist als die Strecke s, die bei überschneidungsfreier Anordnung von Schwenkachse 40 und Spindelachse 42 in Z-Richtung zurückzulegen ist. Soll also das Werkstück 20 in einer Raumrichtung und anschließend senkrecht dazu von dem Werkzeug 22 bearbeitet werden, so erfordert die in Fig. 4a gezeigte Werkzeugmaschine einen geringeren Verfahrweg des Fahrständers 32 in der Vertikalen (Z-Richtung), als dies bei der Werkzeugmaschine nach Fig. 4b der Fall ist. Aufgrund dieses geringeren Verfahrweges läßt sich die Bauhöhe der Werkzeugmaschine insgesamt verringern.

Aus Fig. 3 geht außerdem hervor, daß sich die Schwenkachse 40 im vorderen Viertel des Spindelgehäuses 30, d. h. möglichst nahe bei dem Werkzeug 22, befindet. Diese Maßnahme trägt dazu bei, den Radius der Kreisbahn 62 und damit die erforderlichen Verfahrwege für den Fahrständer 32 klein zu halten. Wie in Fig. 3 erkennbar ist, sollte die Schwenkachse 40 allerdings auch nicht zu nahe an dem Werkzeug 22 angeordnet sein, da die Schwenkeinrichtung 38 ansonsten bei der Bearbeitung des Werkstücks 20 im Wege sein kann.

Die Fig. 5a bis 5d zeigen die Werkzeugmaschine 10 in Draufsicht, wobei der Fahrständer 32 mit dem daran befestigten Spindelgehäuse 30 nicht dargestellt ist. In der Draufsicht erkennbar sind insbesondere die NC-Drehspindel 14 mit dem darin gehaltenen Werkstück 20 sowie der Träger 44, der auf Schienen 64 und 66 in der mit 52 angedeuteten X-Richtung verfahrbar ist.

Auf dem Träger 44 sind die drei Halter 54, 56 und 58 exzentrisch zu der senkrechten Achse 46 angeordnet. Die Anordnung erfolgt dabei so, daß bei Verdrehen des Trägers 44 um die senkrechte Achse 46 die Halter 54, 56 und 58 in ihrer jeweiligen Bearbeitungsstellung koaxial zu der NC-Drehspindel 14 bzw. zu dem darin gehaltenen Werkstück 20 ausgerichtet werden.

Der Halter 54, der in Fig. 5a in Funktionsstellung ist, ist als Pinole mit einem Dorn 68 ausgeführt, der das Werkstück 20 an seiner Stirnfläche 60 hält, wie dies bspw. bei einer Drehbearbeitung zur Zentrierung zweckmäßig ist.

Der Halter 56, der in Fig. 5b in Funktionsstellung ist, ist als Lünette ausgebildet, durch die das Werkstück 20 hindurchgeführt werden kann. Die Lünette 56 stützt das Werkstück 20 dabei so ab, daß auch mit größeren Schneidkräften eine Bearbeitung in der Nähe der Lünette 56 möglich ist, ohne daß auftretende Biegekräfte zu einer Verformung des Werkstücks 20 führen. Durch Verfahren des Trägers 44 in Richtung des Pfeils 52 kann das Werkstück 20 dort abgestützt werden, wo eine Bearbeitung vorgenommen werden soll. Auf diese Weise wird das Werkstück 20 stets kurz abgestützt.

Der Halter 58, der in den Fig. 5c koaxial zu der NC-Drehspindel 14 und in Fig. 5d parallel hierzu ausgerichtet ist, ist als Kraftspannbock ausgebildet, der hydraulisch betätigbare Spannbacken 70 und 72 aufweist. Mit Hilfe des Kraftspannbocks 58 kann ein Werkstück 20 fest fixiert werden, wie dies bei Bohr- und Fräsarbeiten in der Regel erforderlich ist. Der Kraftspannbock 58 kann außerdem dazu verwendet werden, den Vorschub des Werkstücks 20 in der X-Richtung zu bewirken. Auf diese Weise können auch längere Werkstücke sukzessive bearbeitet werden.

Zum Wenden des Werkstückes 20 wird dieses zunächst an der durch einen Pfeil 74 in Fig. 5c gekennzeichneten Stelle durch Sägen oder Fräsen durchtrennt. Anschließend wird der Träger 44 mit den darauf befestigten Haltern in Richtung eines Pfeiles 76 um 180° gedreht, wodurch auch das nach wie vor in dem Kraftspannbock 58 fixierte Werkstückteil 20' verschwenkt wird. Das Werkstückteil 20' geht dabei in die in Fig. 5d dargestellte Lage über. In dieser gewendeten Lage kann das Werkstückteil 20' auch an seiner vorher zu der NC-Drehspindel 14 weisenden Seite bearbeitet werden. Der Kraftspannbock 58 hat somit zwei Bearbeitungsstellungen, nämlich eine koaxial zu dem ersten Halter und eine zweite parallel hierzu.

Selbstverständlich kann ein Werkstück 20 auch ohne vorhergehendes Trennen gewendet werden. Es ist dann lediglich soweit durch Verfahren des Trägers 44 in der X-Richtung 52 aus der NC-Drehspindel 14 herauszuziehen, daß es nicht mehr von dieser gehalten wird. Anschließend kann das Werkstück 20 dann wie soeben beschrieben durch Drehen des Trägers 44 um die senkrechte Achse 46 gewendet werden. Je nach Art der Bearbeitung genügt u.U. auch eine Drehung des Trägers 44 um weniger als 180°, z.B. um 90°. Selbst dann wird aber auch die Einspannstelle bzw. Trennstelle einer Bearbeitung zumindest teilweise zugänglich.

Der Träger 44 stellt somit eine Multifunktionsplattform dar, auf der Halter mit unterschiedlichen Funktionen durch einfaches Drehen um die senkrechte Achse 46 in eine Arbeitsposition überführt werden können. Zusammen mit der Verfahrbarkeit des Trägers 44 in der X-Richtung 52 ergeben sich dadurch vielfältige Bearbeitungsmöglichkeiten für das Werkstück 20. Vorzugsweise sind die Halter 54, 56 und 58 lösbar an dem Träger 44 befestigt, so daß sie gegen Halter mit anderen Funktionen ausgetauscht werden können.

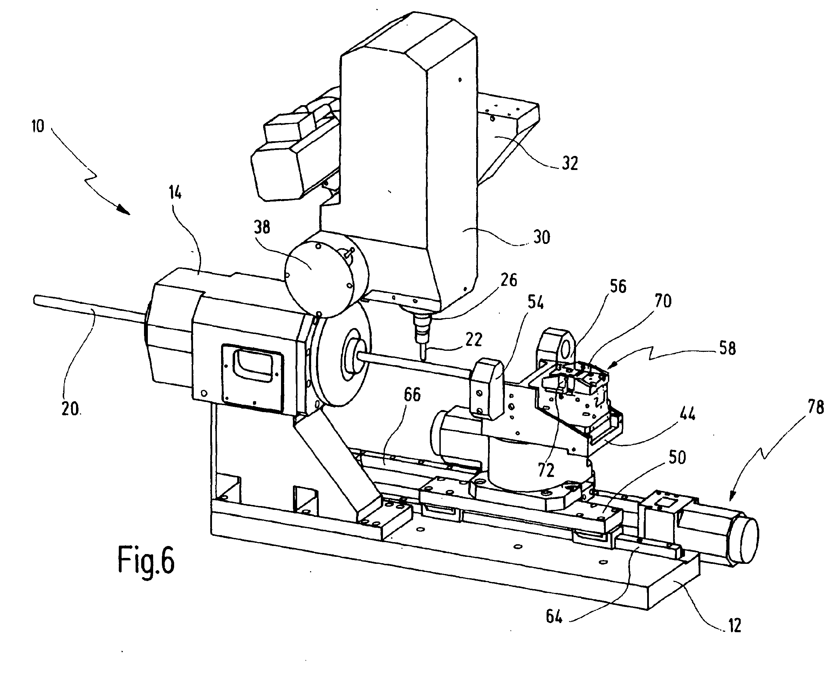

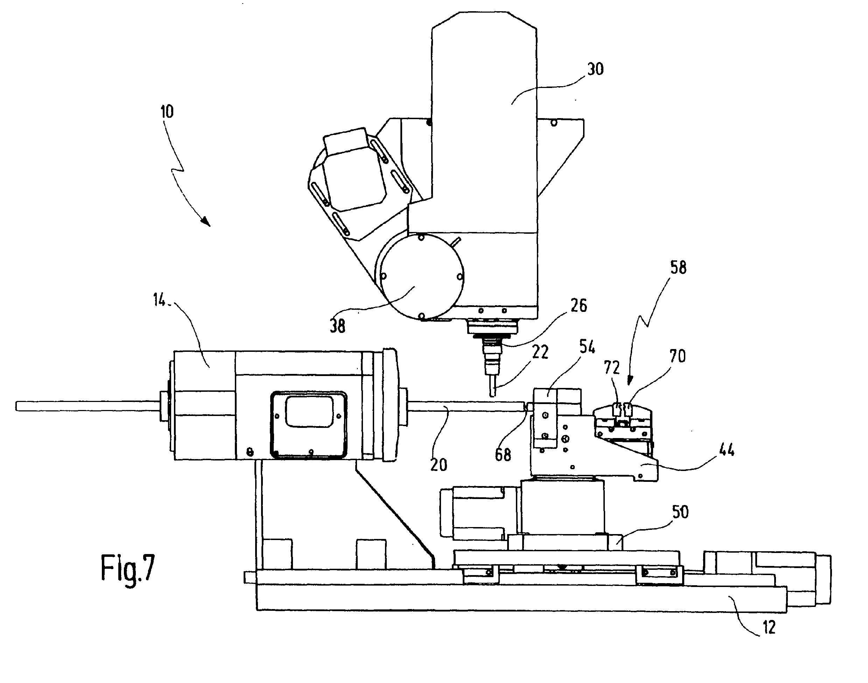

Die Fig. 6 und 7 zeigen in einer perspektivischen Darstellung bzw. in einer Vorderansicht die Werkzeugmaschine 10 in der in Fig. 5a gezeigten Bearbeitungsposition. In dieser Darstellung sind zahlreiche zusätzliche konstruktive Einzelheiten der erfindungsgemäßen Werkzeugmaschine 10 erkennbar, z.B. eine automatische Vorschubeinrichtung 78 zum Verfahren des Trägers 44. Die Fig. 6 und 7 zeigen die Werkzeugmaschine 10 bei der Bearbeitung eines zylindrischen Werkstücks 20, das in die NC-Drehspindel 14 eingespannt und an seinem freien Ende mit Hilfe des Dorns 68 der Pinole 54 zentriert ist. Bei dem Werkzeug 22 handelt es sich in diesem Fall um einen Drehmeißel.

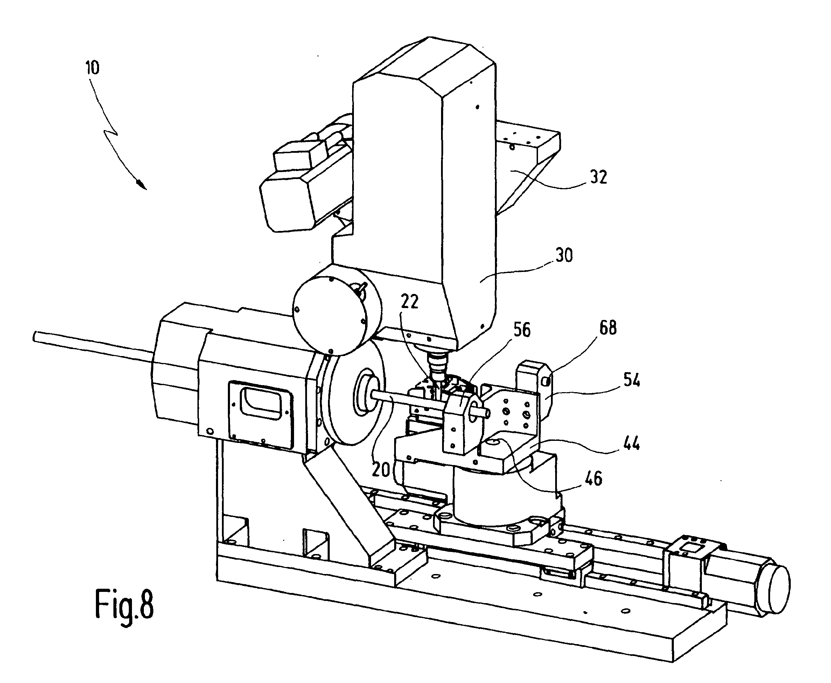

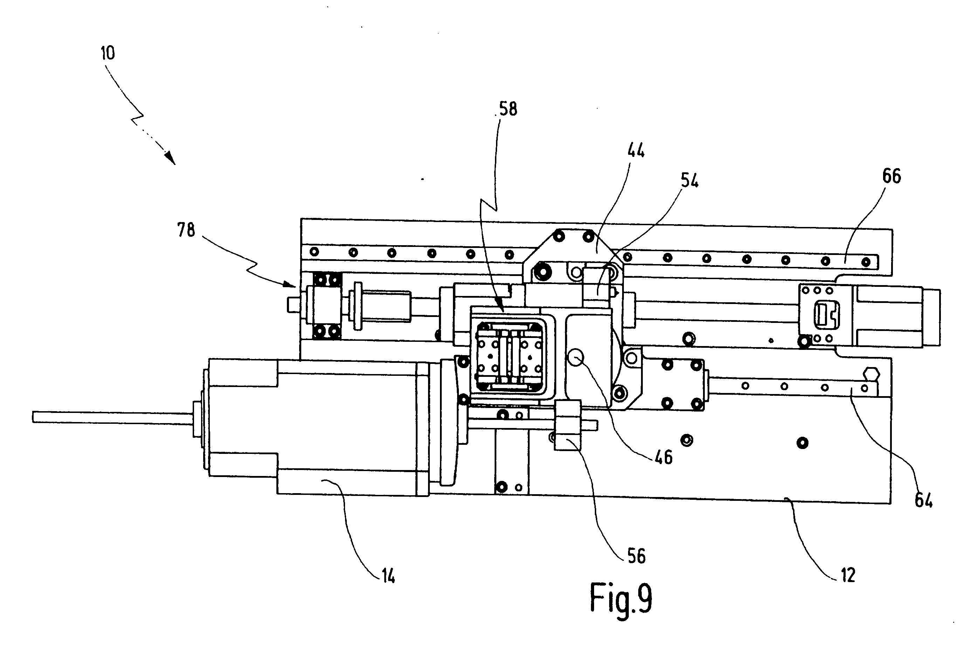

Die Fig. 8 und 9 zeigen in einer perspektivischen Darstellung bzw. in Draufsicht die Werkzeugmaschine 10 in der in Fig. 5b gezeigten Bearbeitungsposition. Das zylindrische Werkstück 20 wird hier von der NC-Drehspindel 14 und der Lünette 56 gehalten. Um die Werkzeugmaschine 10 aus der in den Fig. 6 und 7 dargestellten Bearbeitungsposition in die hier dargestellte zu überführen, wird der Träger 44 zunächst zurückgefahren, dann um 180° um die senkrechte Achse 46 gedreht und schließlich wieder zu der NC-Drehspindel 14 hin verfahren. Bei der Drehbearbeitung mit Hilfe des Werkzeugs 22 kann der Träger 44 mit der darauf befestigten Lünette 56 synchron und parallel zu dem Fahrständer 32 verfahren werden, so daß stets eine kurze Abstützung des Werkstücks 20 gewährleistet ist.

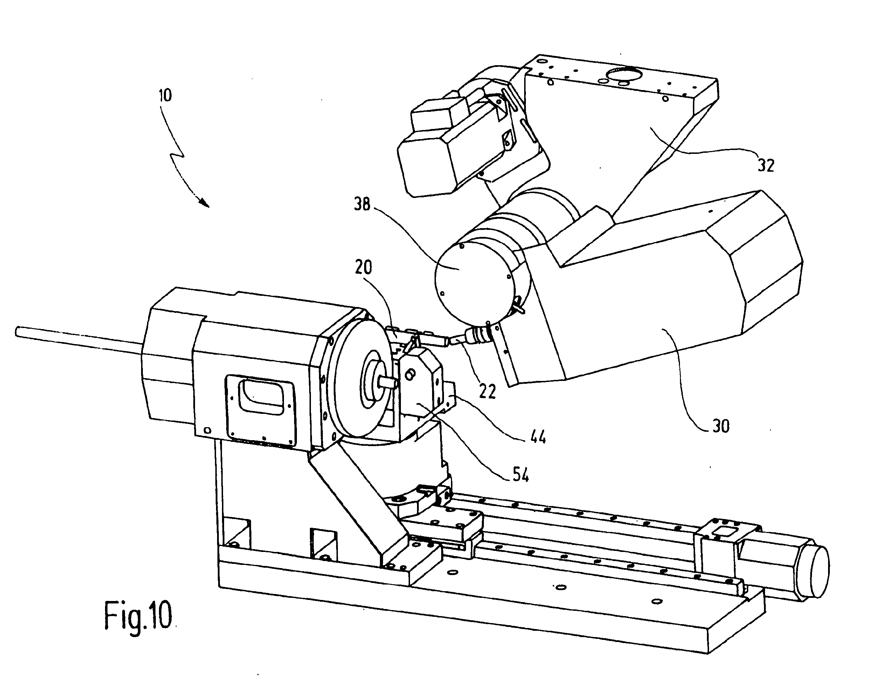

Fig. 10 zeigt die Werkzeugmaschine 10 in einer perspektivischen Darstellung in einer Bearbeitungsposition, die der in Fig. 5d dargestellten entspricht. Die nach dem Wenden des Werkstücks 20 zugänglich gewordene Stirnfläche wird hier von einem Werkzeug 22 bearbeitet, wobei das Spindelgehäuse gegenüber der in Fig. 8 gezeigten Lage um ca. 80° verschwenkt wurde.

## Patentansprüche

1. Werkzeugmaschine zur Bearbeitung eines stangenförmigen Werkstücks (20), mit einer Werkzeugspindel (26) sowie mit einem ersten (14) und einem zweiten (54, 56, 58) Halter zur Aufnahme des Werkstücks (20), wobei der zweite Halter (54, 56, 58) in einer Bearbeitungsstellung koaxial zu dem ersten Halter (14) ausgerichtet und um eine zu einer Längsachse (17) des Werkstücks (20) senkrechte Achse (46) drehbar angeordnet ist, **dadurch gekennzeichnet, daß** der zweite Halter (54, 56, 58) um die senkrechte Achse (46) verschwenkbar ist, daß der zweite Halter (54, 56, 58) zur Erzielung einer Schwenkbewegung exzentrisch zu der senkrechten Achse (46) angeordnet ist, daß der zweite Halter (54, 56, 58) auf einem um die senkrechte Achse (46) drehbaren Träger (44) angeordnet ist, und daß die senkrechte Achse (4b) die Längsachse (17) nicht schneidet.

2. Werkzeugmaschine nach Anspruch 1, **dadurch gekennzeichnet, daß** der zweite Halter (54, 56, 58) um wenigstens 180° dreh- oder verschwenkbar ist.

3. Werkzeugmaschine nach Anspruch 1 oder 2 , **dadurch gekennzeichnet, daß** auf dem Träger (44) außerdem wenigstens ein weiterer Halter (54, 56, 58) exzentrisch zu der senkrechten Achse (46) angeordnet ist, so daß der weitere Halter (54, 56, 58) durch Drehen des Trägers (44) um die senkrechte Achse (46) in eine zu dem ersten Halter (14) koaxiale Lage überführbar ist.

4. Werkzeugmaschine nach Anspruch 3, **dadurch gekennzeichnet, daß** die weiteren Halter (54, 56, 58) unterschiedlich, insbesondere als Lünette (56), als Pinole (54) oder als Kraftspannbock (58), ausgebildet sind.

5. Werkzeugmaschine nach einem der vorhergehenden Ansprüche, **dadurch gekennzeichnet, daß** der erste Halter (14) gegenüber der Werkzeugmaschine (10) raumfest und der zweite Halter (54, 56, 58) parallel zu der Längsachse (17) des Werkstücks (20) verfahrbar angeordnet ist.

6. Werkzeugmaschine nach einem der vorhergehenden Ansprüche, **dadurch gekennzeichnet, daß** der erste Halter (14) als Drehspindel ausgebildet ist.

7. Werkzeugmaschine nach einem der vorhergehenden Ansprüche, **gekennzeichnet durch** einen Fahrständer (32), an dem die um eine Spindelachse (42) drehbare Werkzeugspindel (26) um eine Schwenkachse (40) verschwenkbar befestigt ist, wobei die Schwenkachse (40) senkrecht sowohl zu der Spindelachse (42) als auch zu einer Längsachse (17) des Werkstücks (20) angeordnet ist.

8. Werkzeugmaschine nach Anspruch 7, **dadurch gekennzeichnet, daß** die Schwenkachse (40) überschneidungsfrei zu der Spindelachse (42) angeordnet ist.

9. Werkzeugmaschine nach einem der Ansprüche 1 bis 6, **gekennzeichnet durch** einen Fahrständer (32), an dem die um eine Spindelachse (42) drehbare Werkzeugspindel (26) um eine Schwenkachse (40) verschwenkbar befestigt ist, wobei die Schwenkachse senkrecht und überschneidungsfrei zu der Spindelachse (42) angeordnet ist.

10. Werkzeugmaschine nach einem der Ansprüche 7 bis 9, **dadurch gekennzeichnet, daß** die Werkzeugspindel (26) um einen Schwenkwinkel von mindestens 90° verschwenkbar ist.

11. Werkzeugmaschine nach einem der Ansprüche 7 bis 10, **dadurch gekennzeichnet, daß** die Werkzeugspindel (26) vorzugsweise zusammen mit einem Antrieb (28) hierfür in einem Spindelgehäuse (30) aufgenommen ist, und daß die Schwenkachse (40) auf der Höhe der vorderen, eine Werkzeugaufnahme (24) aufweisenden Hälfte, vorzugsweise auf der Höhe des vorderen Viertels, des Spindelgehäuses (30) verläuft.

12. Verfahren zum Bearbeiten eines stangenförmigen Werkstücks (20) unter Verwendung einer Werkzeugmaschine (10), die eine Werkzeugspindel (26) sowie einen ersten (14) und einen zweiten (54, 56, 58) Halter zur Aufnahme des Werkstücks (20) aufweist, **gekennzeichnet durch** folgende Schritte:
a) Einführen des Werkstücks (20) in den ersten Halter (14) und den zweiten Halter (54, 56, 58), wobei der zweite Halter (54, 56, 58) koaxial zu dem ersten Halter (14) ausgerichtet ist;
b) Bearbeiten des Werkstücks (20) mit einem Werkzeug (22), das in einer an der Werkzeugspindel (26) angeordneten Werkzeugaufnahme (24) aufgenommen ist;
c) Durchtrennen des Werkstücks an einer Stelle zwischen dem ersten Halter (14) und dem zweiten Halter (54, 56, 58) oder Herausschieben des Werkstücks (20) aus dem ersten Halter (14);
d) Drehen oder Schwenken des zweiten Halters (54, 56, 58) um eine zu einer Längsachse (17) des Werkstücks (20) senkrechte Achse (46);
e) Bearbeiten des in dem zweiten Halter (54, 56, 58) gehaltenen Werkstücks (20).

## Claims

1. Machine tool for machining a rod-shaped workpiece (20), having a tool spindle (26) as well as a first (14) and a second (54, 56, 58) holder for holding said workpiece (20), whereby said second holder (54, 56, 58) is oriented coaxially to said first holder (14) in a machining position and is configured to be rotated about an axis (46) arranged perpendicular to a longitudinal axis (17) of the workpiece (20),
**characterized in that** said second holder (54, 56, 58) is configured to be swiveled about said perpendicular axis (46), that for providing a swiveling movement, said second holder (54, 56, 58) is arranged eccentrically to said perpendicular axis (46), that said second holder (54, 56, 58) is arranged on a support (44) which is rotatable about said perpendicular axis (46), and that said perpendicular axis (46) does not intersect said longitudinal axis (17).

2. The machine tool of claim 1, **characterized in that** said second holder (54, 56, 58) can be rotated or swiveled by at least 180°.

3. The machine tool of claim 1 or 2, **characterized in that** on said support (44) at least one further holder (54, 56, 58) is arranged eccentrically with respect to said perpendicular axis( 46), such that said further holder (54, 56, 58) by rotation of said support (44) about said perpendicular axis (46) can be shifted into a position coaxial to said first holder (14).

4. The machine tool of claim 3, **characterized in that** said further holders (54, 56, 58) are designed differently, especially as a steadyrest (56), a tailstock quill (54) or as a power operated clamping block (58).

5. The machine tool of anyone of the preceding claims, **characterized in that** said first holder (14) is arranged spatially fixed with respect to the machine tool (10), and that the second holder (54, 56, 58) is arranged to be traversed in parallel to said longitudinal axis (17) of said workpiece (20).

6. The machine tool of anyone of the preceding claims, **characterized in that** said first holder (14) is designed as a lathe spindle.

7. The machine tool of anyone of the preceding claims, **characterized by** a traveling column (32) on which said tool spindle (26), that is rotatable about said spindle axis (42), is arranged for swiveling about a swiveling axis (40), whereby said swiveling axis (40) is arranged perpendicularly to said spindle axis (42) as well as to said longitudinal axis (17) of said workpiece (20).

8. The machine tool of claim 7, **characterized in that** the swivel axis (40) does not intersect said spindle axis (42).

9. The machine tool of anyone of claims 1-6, **characterized by** a moving column (32) on which said tool spindle (26), that is rotatable about said spindle axis (42), is arranged for swiveling about a swiveling axis (40), whereby said swiveling axis (40) is arranged perpendicular to said spindle axis (42) and does not intersect said spindle axis (42).

10. The machine tool of anyone of claims 7-9, **characterized in that** said tool spindle (26) can be swiveled within a swivel angle of at least 90°.

11. The machine tool of anyone of claims 7-10, **characterized in that** said spindle (26), preferably together with a drive (28) therefor, is supported within a spindle housing (30), and that said swivel axis (40) runs at the level of the front half of the spindle housing (30), said front half having a tool receptacle (24), preferably at the level of the front quarter of the spindle housing.

12. A method for machining a rod-shaped workpiece (20) by using a machine tool (10) having a tool spindle (26) and a first (14) and a second (54, 56, 58) holder for holding said workpiece (20), **characterized by** the following steps:
a) inserting said workpiece (20) into said first holder (14) and said second holder (54, 56, 58), whereby said second holder (54, 56, 58) is oriented coaxially with said first holder (14);
b) machining the workpiece (20) with a tool (22) accommodated within a tool receptacle (24) arranged at the tool spindle (26);
c) cutting said workpiece at a place between said first holder (14) and said second holder (54, 56, 58) or pushing said workpiece (20) out of said first holder (14);
d) rotating or swiveling said second holder (54, 56, 58) about an axis (46) perpendicular to a longitudinal axis (17) of said workpiece (20);
e) machining said workpiece (20) while being held within said second holder (54, 56, 58).

## Revendications

1. Machine-outil pour l'usinage d'une pièce en forme de barre (20) ayant une broche d'outil (26) et comprenant en outre un premier (14) et un deuxième (54, 56, 58) supports pour recevoir la pièce à usiner (20), où le deuxième support (54, 56, 58) est orienté dans une position de travail de façon coaxiale avec le premier support (14) et est agencé de façon rotative autour d'un axe vertical (46) perpendiculaire à l'axe longitudinal (17) de la pièce à usiner (20), **caractérisée en ce que** le deuxième support (54, 56, 58) peut pivoter autour de l'axe vertical (46), **en ce que** le deuxième support (54, 56, 58) est agencé de façon excentrique par rapport à l'axe vertical (46) de manière à produire un mouvement de pivotement, **en ce que** le deuxième support (54, 56, 58) est agencé sur un appui (44) en rotation autour de l'axe vertical (46), et **en ce que** l'axe vertical (4b) ne coupe pas l'axe longitudinal (17).

2. Machine-outil selon la revendication 1, **caractérisée en ce que** le deuxième support (54, 56, 58) peut tourner ou pivoter sur au moins 180°.

3. Machine-outil selon la revendication 1 ou 2, **caractérisée en ce qu'**au moins un support supplémentaire (54, 56, 58) est agencé sur l'appui (44) de façon excentrique par rapport à l'axe vertical (46) de telle sorte que le support supplémentaire (54, 56, 58) peut être amené, par la rotation de l'appui (44) autour de l'axe vertical (46), dans une position coaxiale avec le premier support (14).

4. Machine-outil selon la revendication 3, **caractérisée en ce que** le support supplémentaire (54, 56, 58) est réalisé différemment, en particulier sous forme de lunette (56), de douille (54) ou de chevalet de tension de force (58).

5. Machine-outil selon l'une des revendications précédentes, **caractérisée en ce que** le premier support (14) est agencé en position stabilisée par rapport à la machine-outil (10) et le deuxième support (54, 56, 58) est agencé en position mobile parallèlement à l'axe longitudinal (17) de la pièce à usiner (20).

6. Machine-outil selon l'une des revendications précédentes, **caractérisée en ce que** le premier support (14) est réalisé sous forme de broche de tournage.

7. Machine-outil selon l'une des revendications précédentes, **caractérisée par** un montant mobile (32) sur lequel la broche d'outil (26) en rotation autour d'un axe de la broche (42) est fixée de façon pivotante autour d'un axe de basculement (40), l'axe de basculement (40) étant agencé perpendiculairement à la fois à l'axe de la broche (42) et à un axe longitudinal (17) de la pièce à usiner (20).

8. Machine-outil selon la revendication 7, **caractérisée en ce que** l'axe de basculement (40) est agencé sans intersection avec l'axe de la broche (42).

9. Machine-outil selon l'une des revendications 1 à 6, **caractérisée par** un montant mobile (32) sur lequel la broche d'outil (26) en rotation autour d'un axe de la broche (42) est fixée de façon pivotante autour d'un axe de basculement (40), l'axe de basculement étant agencé perpendiculairement et sans intersection avec l'axe de la broche (42).

10. Machine-outil selon l'une des revendications 7 à 9, **caractérisée en ce que** la broche d'outil (26) peut pivoter sur un angle de basculement d'au moins 90°.

11. Machine-outil selon l'une des revendications 7 à 10, **caractérisée en ce que** la broche d'outil (26) est logée dans un boîtier de broche (30), de préférence en conjonction avec un entraînement (28) pour celle-ci, et **en ce que** l'axe de basculement (40) s'étend à la hauteur de la moitié avant présentant un raccordement d'outil (24), de préférence à la hauteur du quart avant, du boîtier de la broche (30).

12. Procédé d'usinage d'une pièce en forme de barre (20) en utilisant une machine-outil (10) qui comprend une broche d'outil (26) ainsi qu'un premier (14) et un deuxième (54, 56, 58) supports pour recevoir la pièce à usiner (20), **caractérisé par** les étapes suivantes :
a) introduire la pièce à usiner (20) dans le premier support (14) et le deuxième support (54, 56, 58), le deuxième support (54, 56, 58) étant orienté de façon coaxiale avec le premier support (14) ;
b) usiner la pièce (20) avec un outil (22) qui est logé dans un raccordement d'outil (24) agencé sur la broche d'outil (26) ;
c) diviser la pièce à usiner à un endroit entre le premier support (14) et le deuxième support (54, 56, 58) ou retirer la pièce à usiner (20) du premier support (14) ;
d) faire tourner ou basculer le deuxième support (54, 56, 58) autour d'un axe (46) perpendiculaire à un axe longitudinal (17) de la pièce à usiner (20) ;
e) usiner la pièce (20) maintenue dans le deuxième support (54, 56, 58).
